# EUROPÄISCHE PATENTSCHRIFT

(11) **EP 3 431 444 B1**
(45) Veröffentlichungstag und Bekanntmachung des Hinweises auf die Patenterteilung: **28.08.2019**
(21) Anmeldenummer: 17182568.0
(22) Anmeldetag: 21.07.2017
(51) Int. Cl.: C02F 1/66, C02F 1/72, C02F 1/76

(54) **VERFAHREN ZUR REINIGUNG UND/ODER DESINFEKTION VON ROHRLEITUNGEN UND/ODER ZUR DESINFEKTION VON TRINKWASSER**
METHOD FOR CLEANING AND/OR DISINFECTING PIPELINES AND/OR FOR THE DISINFECTION OF POTABLE WATER
PROCÉDÉ DE NETTOYAGE ET/OU DE DÉSINFECTION DE CONDUITES ET/OU DE DÉSINFECTION D'EAU POTABLE

(43) Veröffentlichungstag der Anmeldung: 23.01.2019
(73) Patentinhaber: Scheideler, Michael, 45721 Haltern am See (DE)
(72) Erfinder: Scheideler, Michael, 45721 Haltern am See (DE)
(74) Vertreter: Rohmann, Michael

(56) Entgegenhaltungen:
- US-A1- 2002 134 731
- US-A1- 2008 006 587
- US-A1- 2008 017 588

## Beschreibung

Die Erfindung betrifft ein Verfahren zur Reinigung und/oder Desinfektion von Rohrleitungen und/oder zur Desinfektion von Trinkwasser, wobei zumindest ein fluides Reinigungsmedium verwendet wird. Außerdem betrifft die Erfindung eine Vorrichtung zur Durchführung dieses Verfahrens.

Verfahren der vorstehend beschriebenen Art sind aus der Praxis in unterschiedlichen Ausführungsformen bekannt. Beispielsweise beschreibt DE 38 28 977 A1 ein Verfahren zur Entfernung von Ablagerungen in Trinkwasserversorgungseinrichtungen. Das Reinigungsmedium enthält dabei eine chlorhaltige azide Komponente wie Salzsäure sowie Peroxomonosulfat-Verbindungen. - Die Effizienz der bekannten Verfahren lässt aber in der Regel zu wünschen übrig, sowohl hinsichtlich der erzielten Reinigungs- und/oder Desinfektionsleistung als auch mit Blick auf die Wirtschaftlichkeit, da die bekannten Verfahren eine verhältnismäßig lange Verweilzeit des Reinigungsmediums in den zu reinigenden und/oder zu desinfizierenden Einrichtungen erfordern. Fernerhin werden dem Reinigungsmedium meist stark azide Komponenten beigemischt, was den Nachteil mit sich bringt, dass Korrosionsschäden auftreten können. US2008/017588, US2008/0006587 und US2002/0134731 beschrieben Verfahren zur Erzeugung eines Reinigungsmediums.

Demgegenüber liegt der Erfindung das technische Problem zugrunde, ein Verfahren der eingangs genannten Art anzugeben, mit dem funktionssicher und kostengünstig eine zufriedenstellende Reinigungs- und/oder Desinfektionsleistung erzielt werden kann und bei dem zugleich die Verweilzeit des Reinigungsmediums in dem Rohrleitungssystem so verringert werden kann, dass die Wirtschaftlichkeit des Verfahrens maximiert wird. Zudem sollen durch das Reinigungsmedium verursachte Korrosionsschäden minimiert werden. Darüber hinaus liegt der Erfindung das technische Problem zugrunde, eine Vorrichtung zur Durchführung des Verfahrens anzugeben.

Zur Lösung des technischen Problems lehrt die Erfindung ein Verfahren zur Reinigung und/oder Desinfektion von Rohrleitungen und/oder zur Desinfektion von Trinkwasser in einem Rohrleitungssystem gemäß dem Anspruch 1.

Fluides Medium und fluides Reinigungsmedium meinen insbesondere ein flüssiges Medium und ein flüssiges Reinigungsmedium, besonders bevorzugt Wasser bzw. Trinkwasser. Rohrleitungssystem meint im Rahmen der Erfindung beispielsweise eine Leitungs- oder Rohranordnung einer Trinkwasserversorgungseinrichtung, einer Brauchwasserversorgungseinrichtung oder einer beliebigen technischen Anlage. - Nach einer bevorzugten Ausführungsform, der im Rahmen der Erfindung besondere Bedeutung zukommt, handelt es sich bei dem erfindungsgemäßen Verfahren um ein Verfahren zur Reinigung und/oder Desinfektion von Rohrleitungen.

Vorzugsweise wird zur Erzeugung des zumindest einen fluiden Reinigungsmediums an zumindest einer Entnahmestelle des das fluide Medium führenden Rohrleitungssystems fluides Medium aus dem Rohrleitungssystem entnommen und daraufhin wird aus dem fluiden Medium das fluide Reinigungsmedium erzeugt, wobei dieses erzeugte fluide Reinigungsmedium anschließend an
zumindest einer Einspeisestelle in das Rohrleitungssystem eingespeist wird. Zweckmäßigerweise wird das Rohrleitungssystem durch ein Absperrventil abgesperrt und dieses Absperrventil ist empfohlenermaßen zwischen der Entnahmestelle und der Einspeisestelle angeordnet. Es empfiehlt sich, dass das fluide Medium in Fließrichtung vor dem Absperrventil dem Rohrleitungssystem an einer Entnahmestelle entnommen und in Fließrichtung nach dem Absperrventil an der Einspeisestelle als fluides Reinigungsmedium in das Rohrleitungssystem wieder eingespeist wird. Am Ende bzw. an einem Ende des zu reinigenden und/oder zu desinfizierenden Rohrleitungssystems ist zweckmäßigerweise zumindest eine Ausspeisestelle angeordnet. Bevorzugt handelt es sich bei der zumindest einen Ausspeisestelle um ein Ventil, besonders bevorzugt um einen Hydranten und/oder um zumindest einen Wasserhahn. Durch die Ausspeisestelle kann das fluide Reinigungsmedium das Rohrleitungssystem verlassen. Es liegt im Rahmen der Erfindung, dass anschließend bzw. nach der Reinigung und/oder Desinfektion das Absperrventil geöffnet wird, um das Rohrleitungssystem mit dem fluiden Medium zu spülen. Dazu werden vorzugsweise die Entnahme- und die Einspeisestelle verschlossen.

Bei dem fluiden Medium handelt es sich insbesondere um Wasser, vorzugsweise umTrinkwasser und/oder Brauchwasser. Dementsprechend enthält auch das fluide Reinigungsmedium insbesondere Wasser. Zweckmäßigerweise enthält das fluide Reinigungsmedium größtenteils Wasser bzw. im Wesentlichen Wasser, insbesondere Trinkwasser und/oder Brauchwasser.

Weiterhin liegt es im Rahmen der Erfindung, dass der pH-Wert des fluiden Mediums anhand einer Einrichtung zur pH-Wert-Bestimmung ermittelt wird. In einer bevorzugten Ausführungsform wird zur Ermittlung des pH-Wertes des Mediums ein pH-Meter verwendet. Die Ermittlung des pH-Wertes kann aber prinzipiell auch anhand anderer fachüblicher Maßnahmen erfolgen.

Die Einstellung des pH-Wertes erfolgt durch Zugabe vor Kohlenstoffdioxid, insbesondere von gasförmigem Kohlenstoffdioxid. Die Erfindung ist dadurch gekennzeichnet, dass dem fluiden Medium in einem Mischreaktor Kohlenstoffdioxid, insbesondere gasförmiges Kohlenstoffdioxid, zugegeben wird und dass durch die Reaktion des Kohlenstoffdioxids mit dem fluiden Medium der pH-Wert des fluiden Mediums verändert wird.

Die zugegebene Menge an Kohlenstoffdioxid wird in Abhängigkeit von dem ermittelten pH-Wert gesteuert und/oder geregelt. Der pH-Wert des fluiden Mediums wird in Fließrichtung hinter dem Mischreaktor ermittelt und die dem Mischreaktor zugeführte Menge an Kohlenstoffdioxid wird in Abhängigkeit von diesem ermittelten pH-Wert gesteuert und/oder geregelt. Die zugegebene Menge an Kohlenstoffdioxid wird dabei zweckmäßigerweise so gesteuert und/oder geregelt, dass der ermittelte pH-Wert des fluiden Reinigungsmediums zwischen 5,0 und 8,0, insbesondere zwischen 5,5 und 7,5 und bevorzugt zwischen 5,5 und 6,5 liegt.

Es liegt im Rahmen der Erfindung, dass die Zugabe der Hypochlorit- und/oder Peroxidquelle nach der Einstellung des pH-Wertes erfolgt. Nach der Einstellung des pH-Wertes meint dabei im Rahmen der Erfindung insbesondere in Fließrichtung des fluiden Mediums nach der Einstellung des pH-Wertes. Die Hypochlorit- und/oder Peroxidquelle wird insbesondere als verdünnte Lösung, bevorzugt als verdünnte wässrige Lösung zugegeben. Es liegt weiterhin im Rahmen der Erfindung, dass für die Zugabe der Hypochlorit- und/oder Peroxidquelle eine Pumpvorrichtung verwendet wird.

Empfohlenermaßen ist die Hypochloritquelle ein Alkali- und/oder Erdalkalimetallhypochlorit, bevorzugt Natrium- und/oder Kalziumhypochlorit und/oder Chlorgas. Hypochloritquelle meint insbesondere zumindest eine Hypochloritverbindung und/oder zumindest eine alternative Verbindung, die durch Reaktion mit dem fluiden Medium hypochlorige Säure bilden kann.

Es liegt im Rahmen der Erfindung, dass die Peroxidquelle Wasserstoffperoxid ist. Peroxidquelle meint insbesondere zumindest eine Peroxidverbindung und/oder zumindest eine alternative Verbindung, die durch Reaktion mit dem fluiden Medium Peroxide, bevorzugt Wasserstoffperoxid, bilden kann. In einer sehr bevorzugten Ausführungsform ist die Peroxidquelle eine wässrige Wasserstoffperoxidlösung, insbesondere mit einer Konzentration zwischen 1 Gew.-% und 50 Gew.-%, bevorzugt zwischen 20 Gew.-% und 45 Gew.-%, besonders bevorzugt zwischen 30 Gew.-% und 40 Gew.-% Wasserstoffperoxid.

Vorzugsweise wird das fluide Reinigungsmedium mit der Maßgabe in das Rohrleitungssystem eingespeist, das die Verweilzeit des fluiden Reinigungsmediums im Rohrleitungssystem 2 Minuten bis 3 Stunden beträgt. Prinzipiell liegt es aber auch im Rahmen der Erfindung, dass das fluide Reinigungsmedium über einen längeren Zeitraum im Rohrleitungssystem verweilt. Verweilzeit meint insbesondere die kontinuierliche Durchströmung des Rohrleitungssystems mit dem fluiden Reinigungsmedium. Dazu sind vorzugsweise die Entnahmestelle, die Einspeisestelle und die Ausspeisestelle geöffnet und das Absperrventil geschlossen. Zur anschließenden Spülung des Rohrleitungssystems mit dem fluiden Medium hat es sich bewährt, die Entnahme- und die Einspeisestelle zu schließen und das Absperrventil zu öffnen. Gemäß einer alternativen Ausführungsform der Erfindung meint Verweilzeit die Zeitspanne, die eine das Rohrleitungssystem zumindest teilweise füllende, bevorzugt größtenteils bzw. im Wesentlichen füllende, besonders bevorzugt vollständig füllende Menge des fluiden Reinigungsmediums in dem Rohrleitungssystem - zweckmäßigerweise im Ruhezustand - verbleibt. Dazu sind zunächst vorzugsweise bei verschlossenem Absperrventil die Entnahmestelle, die Einspeisestelle und die Ausspeisestelle geöffnet, so dass das fluide Reinigungsmedium erzeugt werden kann und es das Rohrleitungssystem kurzzeitig durchströmt. Bevorzugt werden anschließend die Entnahmestelle, und/oder die Einspeisestelle und die Ausspeisestelle verschlossen, so dass das fluide Reinigungsmedium das Rohrleitungssystem nicht verlassen kann. Es liegt im Rahmen der Erfindung, dass nach der Verweilzeit des fluiden Reinigungsmediums die Entnahmestelle und/oder die Einspeisestelle verschlossen sind bzw. werden und die zumindest eine Ausspeisestelle und das Absperrventil geöffnet werden, um das Rohrleitungssystem mit dem fluiden Medium zu spülen.

In einer besonders bevorzugten Ausführungsform wird das fluide Reinigungsmedium zur Reinigung des Rohrleitungssystems mit der Maßgabe in das Rohrleitungssystem eingespeist, dass die Verweilzeit des fluiden Reinigungsmediums im Rohrleitungssystem 30 Minuten bis 3 Stunden, bevorzugt 1 Stunde bis 2,5 Stunden beträgt. Grundsätzlich liegen für die Reinigung des Rohrleitungssystems auch längere Verweilzeiten des fluiden Reinigungsmediums im Rohrleitungssystem im Rahmen der Erfindung.

Bevorzugt wird das fluide Reinigungsmedium zur Desinfektion des Rohrleitungssystems mit der Maßgabe in das Rohrleitungssystem eingespeist, dass die Verweilzeit des fluiden Reinigungsmediums im Rohrleitungssystem 2 Minuten bis 1 Stunde, besonders bevorzugt 20 Minuten bis 1 Stunde beträgt. Grundsätzlich kann das fluide Reinigungsmedium für die Desinfektion auch über einen längeren Zeitraum im Rohrleitungssystem verweilen.

In einer besonders bevorzugten Ausführungsform, der im Rahmen der Erfindung besondere Bedeutung zukommt, ist das Rohrleitungssystem ein wasserführendes Rohrleitungssystem. Prinzipiell kann es sich dabei um ein Brauchwasser- und/oder Trinkwasserrohrleitungssystem handeln. Besonders bevorzugt handelt es sich bei den Rohrleitungssystemen um Gebäudeinstallationen und/oder Hausinstallationen und/oder straßenseitige Rohrleitungssysteme.

Vorzugsweise werden die erfindungsgemäßen Maßnahmen für die Reinigung und/oder Desinfektion eines Rohrleitungssystems eingesetzt. Auf diese Weise kann insbesondere ein rohrinnenseitig vorhandener bzw. anhaftender Biofilm des Rohrleitungssystems entfernt werden und/oder bevorzugt eine Keimbeseitigung in den Rohrleitungen stattfinden. Es liegt im Rahmen der Erfindung, dass die Reinigung und/oder Desinfektion mit zumindest einem Hypochlorit-haltigen fluiden Reinigungsmedium und die Reinigung und/oder Desinfektion mit zumindest einem Peroxid-haltigen fluiden Reinigungsmedium in beliebiger Reihenfolge hintereinander geschaltet sind. Es liegt grundsätzlich auch im Rahmen der Erfindung, dass die erfindungsgemäßen Maßnahmen für die Reinigung und/oder Desinfektion von Trinkwasser eingesetzt werden.

In einer besonders bevorzugten Ausführungsform der Erfindung wird das erfindungsgemäße Verfahren als Bypass-Verfahren durchgeführt. Bypass-Verfahren meint im Rahmen der Erfindung insbesondere, dass das fluide Medium zur Erzeugung des fluiden Reinigungsmediums über eine Bypass-Vorrichtung geführt wird, die einen Teil des Rohrleitungssystems, bevorzugt einen anfänglichen Teil des Rohrleitungssystems überbrückt. Es liegt dabei im Rahmen der Erfindung, dass die Bypass-Vorrichtung zwischen der Entnahmestelle und der Einspeisestelle vorgesehen ist bzw. dass die Bypass-Vorrichtung an der Entnahmestelle und an der Einspeisestelle an das Rohrleitungssystem angeschlossen ist.

Zur Lösung des technischen Problems lehrt die Erfindung insoweit eine Vorrichtung, insbesondere zur Durchführung des erfindungsgemäßen Verfahrens, gemäß dem Anspruch 9. Bypass-Vorrichtung meint insbesondere, dass ein Abschnitt bzw. Rohrleitungsabschnitt des Rohrleitungssystems, bevorzugt ein anfänglicher Abschnitt bzw. Rohrleitungsabschnitt des Rohrleitungssystems, durch die Bypass-Vorrichtung derart überbrückt wird, dass das fluide Medium statt durch den Rohrleitungsabschnitt durch die Bypass-Vorrichtung strömen kann. Es liegt im Rahmen der Erfindung, dass die Bypass-Vorrichtung einen Abschnitt bzw. Rohrleitungsabschnitt des Rohrleitungssystems zwischen der Entnahmestelle und der Einspeisestelle überbrückt. Zweckmäßigerweise ist dabei das Absperrventil in dem überbrückten Abschnitt bzw. Rohrleitungsabschnitt des Rohrleitungssystems angeordnet. Grundsätzlich liegt es aber auch im Rahmen der Erfindung, dass die Bypass-Vorrichtung parallel zu dem bzw. zugleich mit dem überbrückten Abschnitt bzw. Rohrleitungsabschnitt durchströmt wird und an der Einspeisestelle gleichsam eine Mischung des fluiden Mediums und des fluiden Reinigungsmediums erfolgt. Nach einer sehr bevorzugten Ausführungsform, der im Rahmen der Erfindung besondere Bedeutung zukommt, handelt es sich bei der erfindungsgemäßen Vorrichtung um eine Vorrichtung zur Reinigung und/oder Desinfektion von Rohrleitungen.

Der Mischreaktor weist empfohlenermaßen einen Innenraum auf, in dem insbesondere die Mischung des fluiden Mediums mit Kohlenstoffdioxid, bevorzugt mit gasförmigem Kohlenstoffdioxid, erfolgt. Das fluide Medium ist zweckmäßigerweise dem Rohrleitungssystem an einer Entnahmestelle entnehmbar. Die Entnahmestelle ist bevorzugt ein Ventil des Rohrleitungssystems, bevorzugt ein Hydrant. Der Mischreaktor ist vorzugsweise über eine erste Zuführungsleitung mit der Entnahmestelle verbunden. Empfohlenermaßen sind an der ersten Zuführungsleitung zwischen der Entnahmestelle und dem Mischreaktor weitere Vorrichtungskomponenten angeordnet. Dabei kann es sich beispielsweise um Durchflussmesser bzw. Durchflussregler und/oder um zumindest ein Ventil handeln. Eine bevorzugte Ausführungsform der Erfindung ist dadurch gekennzeichnet, dass die erste Zuführungsleitung einen Durchflussmesser und/oder Durchflussregler aufweist.

An den Mischreaktor ist vorzugsweise eine zweite Zuführungsleitung angeschlossen, deren erstes Ende vorzugsweise in dem Innenraum des Mischreaktors endet und über welche bevorzugt Kohlenstoffdioxid in den Mischreaktor einführbar ist. Zweckmäßigerweise ist das zweite Ende der zweiten Zuführungsleitung mit einem Reservoir für Kohlenstoffdioxid, bevorzugt mit einem Druckbehälter, besonders bevorzugt mit einer Gasflasche, verbunden. Gemäß einer bevorzugten Ausführungsform der Erfindung sind an der zweiten Zuführungsleitung zwischen dem Mischreaktor und dem Kohlenstoffdioxid-Reservoir weitere Vorrichtungskomponenten angeordnet. Dabei kann es sich beispielsweise um zumindest einen Durchflussmesser bzw. Durchflussregler und/oder zumindest ein Ventil handeln. In einer sehr bevorzugten Ausgestaltung, der im Rahmen der Erfindung besondere Bedeutung zukommt, ist zwischen dem Mischreaktor und dem Reservoir eine Dosiereinrichtung angeordnet, deren Funktion weiter unten genauer erläutert wird.

Es liegt weiterhin im Rahmen der Erfindung, dass in dem Mischreaktor, bevorzugt an dem Innenraum des Mischreaktors, zumindest eine Düse zur Einleitung von Kohlenstoffdioxid angeordnet ist, die an die zweite Zuführungsleitung angeschlossen ist.

An den Mischreaktor ist insbesondere zumindest eine Einspeiseleitung angeschlossen, über die bevorzugt das fluide Reinigungsmedium in das Rohrleitungssystem einspeisbar ist. Es liegt im Rahmen der Erfindung, dass die Einspeiseleitung den Mischreaktor mit der Einspeisestelle verbindet. Die Einspeisestelle ist bevorzugt ein Ventil des Rohrleitungssystems. Zweckmäßigerweise sind an der Einspeiseleitung zwischen Einspeisestelle und Mischreaktor weitere Vorrichtungskomponenten angeordnet. Dabei kann es sich beispielsweise um zumindest einen Durchflussmesser bzw. Durchflussregler und/oder zumindest ein Ventil handeln.

An die Einspeiseleitung ist zumindest eine Zugabeleitung angeschlossen, über welche Zugabeleitung eine Hypochlorit- und/oder Peroxidquelle in die Einspeiseleitung geleitet werden kann. Empfohlenermaßen ist am Ende der Zugabeleitung ein Vorratsbehältnis für die Hypochlorit- und/oder Peroxidquelle angeordnet. Es ist zweckmäßig, dass die Hypochlorit- und/oder Peroxidquelle mittels einer Pumpvorrichtung in die Einspeiseleitung gefördert wird. Prinzipiell ist es auch möglich, dass die Zugabeleitung in den Mischreaktor führt und bereits im Mischreaktor die Hypochlorit- und/oder Peroxidquelle zugegeben wird.

Eine Einrichtung zur pH-Wert-Bestimmung ist an die Einspeiseleitung angeschlossen. Gemäß der Erfindung ist die Einrichtung zur pH-Wert-Bestimmung in Fließrichtung des fluiden Mediums nach dem Mischreaktor und in Fließrichtung des fluiden Mediums vor der Zugabeleitung angeordnet.

Gemäß der Erfindung ist an der zweiten Zuführungsleitung zumindest eine Dosiereinrichtung angeordnet, über welche die Menge an Kohlenstoffdioxid, die in den Mischreaktor geleitet wird, steuerbar und/oder regelbar ist. Zweckmäßigerweise befindet sich die Dosiereinrichtung zwischen dem Kohlenstoffdioxid-Reservoir und dem Mischreaktor. Prinzipiell kann die Dosiereinrichtung aber auch unmittelbar an dem Kohlenstoffdioxid-Reservoir angeordnet sein.

Gemäß der Erfindung ist die Dosiereinrichtung derart mit der Einrichtung zur pH-Wert-Bestimmung verbunden, dass die Menge an in den Mischreaktor geleiteten Kohlenstoffdioxid in Abhängigkeit von dem ermittelten pH-Wert steuerbar und/oder regelbar ist. Gemäß der Erfindung ist der pH-Wert des fluiden Mediums nach der Zugabe von Kohlenstoffidoxid bestimmbar und in Abhängigkeit von dem ermittelten pH-Wert ist die Menge an in den Mischreaktor geleiteten Kohlenstoffdioxid anhand der Dosiereinrichtung steuerbar und/oder regelbar.

Es liegt weiterhin im Rahmen der Erfindung, dass die Dosiereinrichtung in Verbindung mit zumindest einem an der ersten Zuführungsleitung angeordneten Durchflussmesser bzw. Durchflussregler steht und/oder dass dieser Durchflussmesser bzw. Durchflussregler in Verbindung mit der an der Zugabeleitung angeordneten Pumpvorrichtung steht. Auf diese Weise lassen sich die Zugabe der Hypochlorit- und/oder Peroxidquelle sowie die Zuführung des fluiden Mediums und die Zugabemenge an Kohlenstoffdioxid in Abhängigkeit voneinander und/oder in Abhängigkeit vom ermittelten pH-Wert steuern und/oder regeln.

Nach sehr bevorzugter Ausführungsform, der besondere Bedeutung zukommt, ist die Reinigungs- und/oder Desinfektionsvorrichtung eine mobile Vorrichtung. Insbesondere kann die Vorrichtung auf einem Kraftfahrzeug oder auf einem Kraftfahrzeug-Anhänger angeordnet sein.

Der Erfindung liegt die Erkenntnis zugrunde, dass mit dem erfindungsgemäßen Verfahren und der erfindungsgemäßen Vorrichtung vor allem eine funktionssichere und effektive Reinigung und/oder Desinfektion von Rohrleitungen möglich ist sowie auch eine Desinfektion von Trinkwasser. Das erfindungsgemäße Verfahren zeichnet sich dadurch aus, dass mit einer verhältnismäßig kurzen Verweilzeit des fluiden Reinigungsmediums eine außergewöhnlich hohe Reinigungs- und/oder Desinfektionsleistung erreicht werden kann. Gerade die Kombination von verhältnismäßig kurzen Verweilzeiten und ausgezeichneter Reinigungs- und/oder Desinfektionsleistung ist als Vorteil des erfindungsgemäßen Verfahrens hervorzuheben. Hinsichtlich Effizienz und Wirtschaftlichkeit werden somit hervorragende Ergebnisse erzielt. Das Verfahren arbeitet zudem in einem pH-Wert-Bereich, in dem Schäden durch Korrosion an den Rohrleitungen sowie an den Dichtungen und Ventilen durch das Reinigungsmedium weitgehend vermieden werden können. Zudem ist zu betonen, dass das Verfahren und die Vorrichtung sehr flexibel einsetzbar sind. Von besonderem Vorteil ist insbesondere, dass sich die erfindungsgemäße Vorrichtung einfach und problemlos als mobile Vorrichtung einsetzen lässt und somit zügig zum Einsatzort transportiert werden kann.

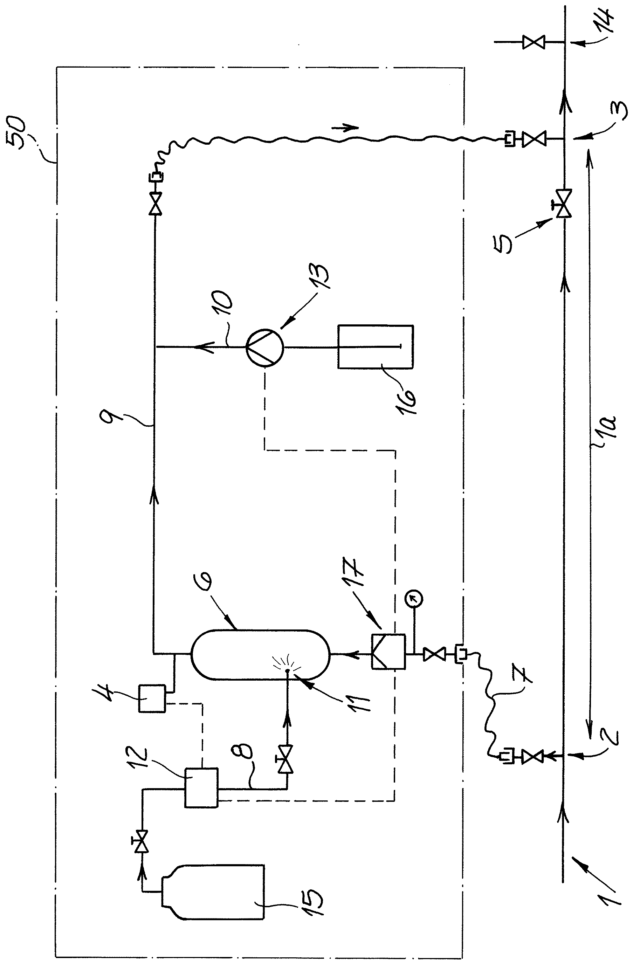

Nachfolgend wird die Erfindung anhand einer, lediglich ein Ausführungsbeispiel darstellenden Zeichnung näher erläutert. Die einzige Figur zeigt in schematischer Darstellung ein Fließschema einer erfindungsgemäßen Vorrichtung zur Durchführung des erfindungsgemäßen Verfahrens.

In der Figur ist schematisch eine erfindungsgemäße Vorrichtung gezeigt, die insbesondere zur Reinigung und/oder Desinfektion von Rohrleitungen eingesetzt wird. Die Vorrichtung ist zweckmäßigerweise und im Ausführungsbeispiel als mobile Vorrichtung 50 ausgeführt. Bei dem zu reinigenden bzw. zu desinfizierenden Rohrleitungssystem 1 kann es sich insbesondere um ein Trinkwasser- und/oder Brauchwasserrohrleitungssystem handeln. Die Vorrichtung ist bevorzugt und im Ausführungsbeispiel als Bypass-Vorrichtung ausgebildet, die an einer Entnahmestelle 2 und einer Einspeisestelle 3 an das Rohrleitungssystem 1 angeschlossen wird, so dass ein Rohrleitungsabschnitt 1a von der Bypass-Vorrichtung überbrückt wird. Dem Rohrleitungssystem 1 wird zweckmäßigerweise an einer Entnahmestelle 2 das fluide Medium, bevorzugt Wasser, entnommen und über die erste Zuführungsleitung 7 in den Mischreaktor 6 geführt. Die Fließrichtung des fluiden Mediums ist in der Figur durch Pfeile dargestellt. An der ersten Zuführungsleitung 7 ist empfohlenermaßen und im Ausführungsbeispiel ein Durchflussmesser/Durchflussregler 17 angeordnet. In dem Mischreaktor 6 wird dem fluiden Medium Kohlenstoffdioxid zugegeben. Dazu ist an den Mischreaktor 6 empfohlenermaßen eine zweite Zuführungsleitung 8 angeschlossen, die wiederum mit einem Reservoir 15 verbunden ist, welches Kohlenstoffdioxid enthält. Vorzugsweise und im Ausführungsbeispiel ist die zweite Zuführungsleitung 8 mit einer Dosiereinrichtung 12 versehen, über welche die dem Mischreaktor 6 zuzuführende Menge an Kohlenstoffdioxid steuerbar und/oder regelbar ist. Zweckmäßigerweise ist in dem Mischreaktor 6 am Ende der zweiten Zuführungsleitung 8 zumindest eine Düse 11 vorgesehen, welche die gleichmäßige und feine Verteilung des Kohlenstoffdioxids in dem Mischreaktor 6 gewährleistet.

Der Mischreaktor 6 ist vorzugsweise in Fließrichtung des fluiden Mediums über eine Einspeiseleitung 9 mit einer Einspeisestelle 3 verbunden, über die das fluide Reinigungsmedium in das Rohrleitungssystem 1 eingespeist wird. Das Rohrleitungssystem 1 weist empfohlenermaßen in Fließrichtung des fluiden Mediums vor der Einspeisestelle 3 in den Rohrleitungsabschnitt 1a ein Absperrventil 5 auf. Durch Verschluss dieses Absperrventils 5 kann erreicht werden, dass das fluide Medium ab der Entnahmestelle 2 ausschließlich durch die Bypass-Vorrichtung strömt und erst an der Einspeisestelle 3 als fluides Reinigungsmedium wieder in das Rohrleitungssystem 1 eingespeist wird. Gemäß der Erfindung ist in Fließrichtung des fluiden Mediums nach dem Mischreaktor 6 an der Einspeiseleitung 9 eine Einrichtung zur pH-Wert-Bestimmung 4 angeordnet, mit der zweckmäßigerweise und im Ausführungsbeispiel der pH-Wert des fluiden Mediums nach dem Austritt aus dem Mischreaktor 6, also nach der Zugabe von Kohlenstoffdioxid ermittelt werden kann. Diese Einrichtung zur pH-Wert-Bestimmung 4 steht mit der Dosiereinrichtung 12 derart in Verbindung, dass die dem Mischreaktor 6 zugegebene Menge an Kohlenstoffdioxid in Abhängigkeit von dem ermittelten pH-Wert steuerbar und/oder regelbar ist.

In Fließrichtung des fluiden Mediums nach der Einrichtung zur pH-Wert-Bestimmung 4 ist an die Einspeiseleitung 9 eine Zugabeleitung 10 angeschlossen, über die die Hypchlorit- und/oder Peroxidquelle - vorzugsweise aus einem Vorratsbehältnis 16 - dem fluiden Medium zugegeben werden kann. Dabei weist die Zugabeleitung 10 zweckmäßigerweise eine Pumpvorrichtung 13 auf, die zur Förderung der Hypochlorit- und/oder Peroxidquelle aus dem Vorratsbehältnis 16 in die Einspeiseleitung 9 dient. Bevorzugt und im Ausführungsbeispiel steht die Pumpvorrichtung 13 mit dem Durchflussmesser/Durchflussregler 17 in Verbindung und steht der Durchflussmesser/Durchflussregler 17 mit der Dosiereinrichtung 12 in Verbindung und steht die Dosiereinrichtung 12 in Verbindung mit der Einrichtung zur pH-Wert-Bestimmung 4. Auf diese Weise lassen sich die Zugabe der Hypochlorit- und/oder Peroxidquelle sowie die Zuführung des fluiden Mediums und die Zugabemenge an Kohlenstoffdioxid in Abhängigkeit voneinander und in Abhängigkeit von dem ermittelten pH-Wert steuern und/oder regeln. In Fließrichtung des fluiden Mediums nach der Einspeisestelle 3 ist bevorzugt zumindest eine Ausspeisestelle 14 angeordnet, durch die das fluide Reinigungsmedium das Rohrleitungssystem 1 verlassen kann. Nach dem Reinigungs- und/oder Desinfektionsvorgang des Rohrleitungssystems 1 wird zweckmäßigerweise das Absperrventil 5 geöffnet und das Rohrleitungssystem 1 mit dem fluiden Medium gespült.

## Patentansprüche

1. Verfahren zur Reinigung und/oder Desinfektion von Rohrleitungen und/oder zur Desinfektion von Trinkwasser in einem Rohrleitungssystem, wobei zumindest ein fluides Reinigungsmedium eingesetzt wird, welches aus zumindest einem fluiden Medium erzeugt wird, wobei hierzu der pH-Wert des fluiden Mediums auf einen Wert zwischen 5,0 und 8,0, insbesondere zwischen 5,5 und 7,5 und bevorzugt zwischen 5,5 und 6,5 eingestellt wird, wobei dem fluiden Medium zumindest eine Hypochloritquelle und/oder zumindest eine Peroxidquelle zugegeben wird, wobei das auf diese Weise erzeugte fluide Reinigungsmedium in ein Rohrleitungssystem (1) eingespeist wird,
**dadurch gekennzeichnet, dass**
die Einstellung des pH-Wertes in einem Mischreaktor (6) durch Zugabe von Kohlenstoffdioxid erfolgt, wobei die zugegebene Menge an Kohlenstoffdioxid in Abhängigkeit von dem ermittelten pH-Wert gesteuert und/oder geregelt wird, wobei der pH-Wert des fluiden Mediums in Fließrichtung hinter dem Mischreaktor (6) ermittelt wird, und wobei die Zugabe der Hypochlorit- und/oder Peroxidquelle nach der Einstellung und nach der Ermittlung des pH-Wertes erfolgt.

2. Verfahren nach Anspruch 1, wobei zur Erzeugung des zumindest einen fluiden Reinigungsmediums an zumindest einer Entnahmestelle (2) des das fluide Medium führenden Rohrleitungssystems (1) fluides Medium aus dem Rohrleitungssystem (1) entnommen wird, wobei danach aus dem fluiden Medium das fluide Reinigungsmedium erzeugt wird und wobei dieses fluide Reinigungsmedium an zumindest einer Einspeisestelle (3) in das Rohrleitungssystem (1) eingespeist wird.

3. Verfahren nach einem der Ansprüche 1 oder 2, wobei als Hypochloritquelle zumindest ein Alkali- und/oder Erdalkalimetallhypochlorit, bevorzugt Natrium- und/oder Kalziumhypochlorit, und/oder Chlorgas eingesetzt wird.

4. Verfahren nach einem der Ansprüche 1 bis 3, wobei als Peroxidquelle Wasserstoffperoxid eingesetzt wird.

5. Verfahren nach einem der Ansprüche 1 bis 4, wobei das fluide Reinigungsmedium mit der Maßgabe in das Rohrleitungssystem (1) eingespeist wird, dass die Verweilzeit des fluiden Reinigungsmediums im Rohrleitungssystem (1) 2 Minuten bis 3 Stunden beträgt.

6. Verfahren nach einem der Ansprüche 1 bis 5, wobei das fluide Reinigungsmedium zur Reinigung des Rohrleitungssystems (1) mit der Maßgabe in das Rohrleitungssystem (1) eingespeist wird, dass die Verweilzeit des fluiden Reinigungsmediums in dem Rohrleitungssystem (1) 30 Minuten bis 3 Stunden, bevorzugt 1 Stunde bis 2,5 Stunden beträgt.

7. Verfahren nach einem der Ansprüche 1 bis 6, wobei das fluide Reinigungsmedium zur Desinfektion mit der Maßgabe in das Rohrleitungssystem (1) eingespeist wird, dass die Verweilzeit des fluiden Reinigungsmediums im Rohrleitungssystem (1) 2 Minuten bis 1 Stunde, bevorzugt 20 Minuten bis 1 Stunde beträgt.

8. Verfahren nach einem der Ansprüche 1 bis 7, wobei das Rohrleitungssystem (1) ein wasserführendes Rohrleitungssystem ist.

9. Reinigungs- und/oder Desinfektionsvorrichtung, insbesondere zur Durchführung eines Verfahrens nach einem der Ansprüche 1 bis 8, wobei die Vorrichtung als Bypass-Vorrichtung zu einem Rohrleitungssystem (1) eingerichtet werden kann und wobei die Vorrichtung zumindest einen Mischreaktor (6) aufweist, in den über zumindest eine erste Zuführungsleitung (7) zumindest ein fluides Medium einführbar ist und in den über zumindest eine zweite Zuführungsleitung (8) zur Erzeugung eines fluiden Reinigungsmediums Kohlenstoffdioxid einführbar ist wobei das fluide Medium dem Rohrleitungssystem (1) an einer Entnahmestelle (2) entnehmbar ist, wobei der Mischreaktor (6) über zumindest eine Einspeiseleitung (9) mit zumindest einer Einspeisestelle (3) des Rohrleitungssystems (1) zur Einleitung des fluiden Reinigungsmediums verbunden werden kann, wobei an die Einspeiseleitung (9) zumindest eine Zugabeleitung (10) angeschlossen ist, über welche Zugabeleitung (10) zumindest eine Hypochlorit- und/oder Peroxidquelle in die Einspeiseleitung (9) geleitet werden kann
**dadurch gekennzeichnet, dass**
an der zumindest einen zweiten Zuführungsleitung (8) zumindest eine Dosiereinrichtung (12) angeordnet ist, über welche die in den Mischreaktor einzuleitende Menge an Kohlenstoffdioxid steuerbar und/oder regelbar ist und wobei die Dosiereinrichtung (12) mit einer Einrichtung zur pH-Wert-Bestimmung (4) derart verbunden ist, dass die in den Mischreaktor (6) einzuleitende Menge an Kohlenstoffdioxid in Abhängigkeit von dem ermittelten pH-Wert steuerbar und/oder regelbar ist, wobei die Einrichtung zur pH-Wert-Bestimmung (4) in Fließrichtung des fluiden Mediums nach dem Mischreaktor (6) und in Fließrichtung des fluiden Mediums vor der Zugabeleitung (10) angeordnet ist und wobei die Zugabe der Hypochlorit- und/oder Peroxidquelle nach der Einstellung des pH-Wertes erfolgt.

10. Vorrichtung nach Anspruch 9, wobei in dem Mischreaktor (6) zumindest eine Düse (11) zur Einleitung von Kohlenstoffdioxid in den Mischreaktor (6) angeordnet ist, die an die zumindest eine zweite Zuführungsleitung (8) angeschlossen ist.

11. Vorrichtung nach einem der Ansprüche 9 oder 10, wobei die Vorrichtung eine mobile Reinigungs- und/oder Desinfektionsvorrichtung ist.

## Claims

1. A method of cleaning and/or disinfecting pipelines and/or for disinfecting drinking water in a pipeline system, wherein at least one fluid cleaning medium is used which is produced from at least one fluid medium, wherein for this the pH value of the fluid medium is set to a value of between 5.0 and 8.0, more particularly between 5.5 and 7.5 and preferably between 5.5 and 6.5, wherein at last one hypochlorite source and/or at least one peroxide source is added to the fluid medium, wherein the fluid cleaning medium produced in way is fed into a pipeline system (1),
**characterised in that**
the setting of the pH value takes place in a mixing reactor (6) through the addition of carbon dioxide,
wherein the added quantity of carbon dioxide is controlled and/or regulated as a function of the determined pH value, wherein the pH value of the fluid medium is determined downstream of the mixing reactor (6) and wherein the addition of hypochlorite and/or peroxide source takes place after setting and after determination of the pH value.

2. The method according to claim 1, wherein to produce the at least one fluid cleaning medium at at least one removal point (2) of the pipeline system (1) conveying the fluid medium, fluid medium is removed from the pipeline system (1), wherein thereafter the fluid cleaning medium is produced from the fluid medium and wherein this fluid cleaning medium is fed into the pipeline system (1) at at least one feed-in point (3).

3. The method according to any one of claims 1 or 2, wherein as the hypochlorite source at least one alkaline and/or alkaline earth metal hypochlorite, preferably sodium and/or calcium hypochlorite and/or chlorine gas is used.

4. The method according to any one of claims 1 to 3, wherein as the peroxide source hydrogen peroxide is used.

5. The method according to any one of claims 1 to 4, wherein the fluid cleaning medium is fed into the pipeline system (1) on the proviso that the dwell time of the fluid cleaning medium in the pipeline system (1) is 2 minutes to 3 hours.

6. The method according to any one of claims 1 to 5, wherein for cleaning the pipeline system (1) the fluid cleaning medium is fed into the pipeline system (1) on the proviso that the dwell time of the fluid cleaning medium in the pipeline system (1) is 30 minutes to 3 hours, preferably 1 hour to 2.5 hours.

7. The method according to any one of claims 1 to 6, wherein for disinfecting the fluid cleaning medium is fed into the pipeline system (1) on the proviso that the dwell time of the fluid cleaning medium in the pipeline system (1) is 2 minutes to 1 hour, preferably 20 minutes to 1 hour.

8. The method according to any one of claims 1 to 7, wherein the pipeline system (1) is a water-conveying pipeline system.

9. A cleaning and/or disinfection device, more particularly for implementing a method according to any one of claims 1 to 8, wherein the device can be set up as a by-pass device for a pipeline system (1) and wherein the device comprises at least one mixing reactor (6) into which via at least one first feed-in pipeline (7) at least one fluid medium can be introduced and into which via at least one second feed-in pipeline (8) carbon dioxide can be introduced to produce a fluid cleaning medium, wherein the fluid medium is removable from the pipeline system (1) at a removal point (2), wherein the mixing reactor (6) can be connected via at least one feed-in pipeline (9) to at least one feed-in point (3) of a pipeline system (1) to feed in the fluid cleaning medium, wherein connected to the feed-in pipeline (9) is at least one adding pipeline (10) via which adding pipeline (10) at least one hypochlorite and/or peroxide source can be directed into the feed-in pipeline (9),
**characterised in that**
on the at least one second feed-in pipeline (8) at least one dosing device (12) is arranged via which the quantity of carbon dioxide to be introduced into the mixing reactor can be controlled and/or regulated and wherein the dosing device (12) is connected to a device (4) for determining the pH value in such a way that the quantity of carbon dioxide to be introduced into the mixing reactor (6) can be controlled and/or regulated as a function of the determined pH value, wherein the device (4) for determining the pH value is arranged downstream of the mixing reactor (6) in the flow direction of the fluid medium and upstream of the feed-in pipeline (10) in the direction of flow of the fluid medium and wherein the addition of the hypochlorite and/or peroxide source takes place after setting the pH value.

10. The device according to claim 9, wherein arranged in the mixing reactor (6) is at least one nozzle (11) for introducing carbon dioxide into the mixing reactor (6) to which the at least one second feed-in pipeline (8) is connected.

11. The device according to any one of claims 9 or 10, wherein the device is a mobile cleaning and/or disinfecting device.

## Revendications

1. Procédé de nettoyage et/ou de désinfection de conduites et/ou de désinfection d'eau potable dans un système de tuyauteries, sachant qu'on utilise au moins un milieu de nettoyage fluide, lequel est produit à partir d'au moins un milieu fluide, sachant qu'à cet effet la valeur de pH du milieu fluide est réglée sur une valeur se situant entre 5,0 et 8,0, notamment entre 5,5 et 7,5, et de préférence entre 5,5 et 6,5, sachant qu'au moins une source d'hypochlorite et/ou au moins une source de peroxyde est ajoutée au milieu fluide, sachant que le milieu de nettoyage fluide produit de cette manière est injecté dans un système de tuyauteries (1),
**caractérisé en ce que**
le réglage de la valeur de pH a lieu dans un réacteur mélangeur (6) par addition de dioxyde de carbone,
sachant que la quantité ajoutée en dioxyde de carbone est commandée et/ou réglée en fonction de la valeur de pH déterminée, sachant que la valeur de pH du milieu fluide est déterminée dans le sens d'écoulement derrière le réacteur de mélange (6), et sachant que l'addition de la source d'hypochlorite et/ou de peroxyde a lieu après le réglage et après la détermination de la valeur de pH.

2. Procédé selon la revendication 1, sachant que pour la production d'au moins un milieu de nettoyage fluide, un milieu fluide est prélevé du système de tuyauteries (1) à au moins un point de prélèvement (2) du système de tuyauteries (1) transportant le milieu fluide, sachant qu'ensuite le milieu de nettoyage fluide est produit à partir du milieu fluide et sachant que ce milieu de nettoyage fluide est injecté dans le système de tuyauteries (1) à au moins un point d'injection(3).

3. Procédé selon l'une quelconque des revendications 1 ou 2, sachant qu'au moins un hypochlorite de métaux alcalins et/ou de métaux alcalinoterreux, de préférence un hypochlorite de potassium et/ou de sodium, et/ou un gaz chloré, est utilisé en tant que source d'hypochlorite.

4. Procédé selon l'une quelconque des revendications 1 à 3, sachant que du peroxyde d'hydrogène est utilisé comme source de peroxyde.

5. Procédé selon l'une quelconque des revendications 1 à 4, sachant que le milieu de nettoyage fluide est injecté dans le système de tuyauteries (1) à condition que la durée de séjour du milieu de nettoyage fluide dans le système de tuyauteries (1) soit de 2 minutes à 3 heures.

6. Procédé selon l'une quelconque des revendications 1 à 5, sachant que le milieu de nettoyage fluide pour le nettoyage du système de tuyauteries (1) est injecté dans le système de tuyauteries (1) à condition que la durée de séjour du milieu de nettoyage fluide dans le système de tuyauteries (1) soit de 30 minutes à 3 heures, de préférence 1 heure à 2,5 heures.

7. Procédé selon l'une quelconque des revendications 1 à 6, sachant que le milieu de nettoyage fluide pour la désinfection est injecté dans le système de tuyauteries (1) à condition que la durée de séjour du milieu de nettoyage fluide dans le système de tuyauteries (1) soit de 2 minutes à 1 heure, de préférence 20 minutes à 1 heure.

8. Procédé selon l'une quelconque des revendications 1 à 7, sachant que le système de tuyauteries (1) est un système de tuyauteries transportant de l'eau.

9. Dispositif de nettoyage et/ou de désinfection, notamment pour l'exécution d'un procédé selon l'une quelconque des revendications 1 à 8, sachant que le dispositif peut être agencé comme un dispositif de dérivation vers un système de tuyauteries (1) et sachant que le dispositif comporte au moins un réacteur de mélange (6) dans lequel au moins un milieu fluide peut être introduit par au moins un premier conduit d'alimentation (7) et dans lequel du dioxyde de carbone peut être introduit par au moins un deuxième conduit d'alimentation (8) pour produire un milieu de nettoyage fluide, sachant que le milieu fluide peut être prélevé du système de tuyauteries (1) à un point de prélèvement (2), sachant que le réacteur de mélange (6) peut être relié par au moins une conduite d'injection (9) à au moins un point d'injection (3) du système de tuyauteries (1) pour introduire le milieu de nettoyage fluide, sachant qu'au moins une conduite d'addition (10) est raccordée à la conduite d'injection (9), conduite d'addition (10) par laquelle au moins une source d'hypochlorite et/ou de peroxyde peut être dirigée dans la conduite d'alimentation (9),
**caractérisé en ce qu'**
au moins un dispositif de dosage (12) est disposé sur au moins un deuxième conduit d'alimentation (8), par le biais duquel la quantité de dioxyde de carbone à introduire dans le réacteur de mélange peut être commandée et/ou réglée et sachant que le dispositif de dosage (12) est relié à un système de détermination de la valeur de pH (4) de telle manière que la quantité de dioxyde de carbone à introduire dans le réacteur de mélange (6) peut être commandée et/ou réglée en fonction de la valeur de pH déterminée, sachant que le système de détermination de la valeur de pH (4) est disposé dans le sens d'écoulement du milieu fluide vers le réacteur de mélange (6) et dans le sens d'écoulement du milieu fluide avant la conduite d'addition (10) et sachant que l'addition de la source d'hypochlorite et/ou de peroxyde a lieu après le réglage de la valeur de pH.

10. Dispositif selon la revendication 9, sachant qu'au moins une buse (11) est disposée dans le réacteur de mélange (6) pour introduire du dioxyde de carbone dans le réacteur de mélange (6), qui est raccordée à au moins une deuxième conduite d'alimentation (8).

11. Dispositif selon l'une quelconque des revendications 9 ou 10, sachant que le dispositif est un dispositif mobile de nettoyage et/ou de désinfection.
